# EUROPEAN PATENT APPLICATION

(11) **EP 4 669 039 A1**
(43) Date of publication of application: **24.12.2025**
(21) Application number: 25720233.3
(22) Date of filing: 28.03.2025
(51) Int. Cl.: H05K 5/06, H04M 1/02, G06F 3/041

(54) **ELECTRONIC DEVICE INCLUDING WATERPROOF STRUCTURE**

(30) Priority: 29.04.2024 KR 20240057090; 05.06.2024 KR 20240073826
(71) Applicant: Samsung Electronics Co., Ltd, Suwon-si, Gyeonggi-do 16677 (KR)
(72) Inventor: SEO, Jaeil, Suwon-si, Gyeonggi-do 16677 (KR); SHIM, Minchang, Suwon-si, Gyeonggi-do 16677 (KR); LEE, Yongseok, Suwon-si, Gyeonggi-do 16677 (KR)
(74) Representative: Gulde & Partner
(86) International application number: PCT/KR2025/004011
(87) International publication number: WO 2025/230141

(57) **Abstract**

An electronic device according to an embodiment of the disclosure may include a housing and a display disposed in the housing. The display may include a transparent layer, a display panel disposed on a rear surface of the transparent layer, at least one layer disposed on a rear surface of the display panel, and a bendable portion extending from the display panel, at least a part of the bendable portion being disposed on a rear surface of the layer. The electronic device may include a molded member at least partially covering the bendable portion, the molded member including an inclined portion inclined with respect to the rear surface of the layer. Various other embodiments may be possible.

## Description

### [Technical Field]

Various embodiments disclosed herein relate to an electronic device including a waterproof structure.

### [Background Art]

An electronic device may require a sealed waterproof and/or dustproof structure to prevent damage to electronic components disposed in an inner space due to moisture and/or foreign substances introduced from the outside. For example, a sealing member (e.g., a waterproof tape) may be disposed in a space between a housing and a display of the electronic device to prevent moisture and/or foreign substances from being introduced between the housing and the display.

The above-described information may be provided as related art for the purpose of facilitating an understanding of the disclosure. No claim or determination is made as to whether any of the foregoing is applicable as prior art with respect to the disclosure.

### [Disclosure of Invention]

### [Technical Problem]

A sealing member may be disposed in a space between a housing and a display of an electronic device to prevent moisture and/or foreign substances from being introduced between the housing and the display.

The electronic device may include a bendable portion connected to a display panel and disposed in a manner of being folded toward a rear surface which is the opposite side of a front surface of the display. The bendable portion may be at least partially covered by a molded member disposed on the rear surface of the display. The molded member may mitigate a step between components arranged on the rear surface of the display and may be bonded to the sealing member. For example, the molded member may mitigate a step between the bendable portion and an area where the bendable portion is not disposed on the rear surface of the display. In addition, the sealing member may be disposed along the perimeter of the electronic device and at least partially bonded to the molded member.

The rear surface of the display may have a step between an area where the molded member is disposed and an area where the molded member is not disposed on the rear surface of the display. In this case, a plurality of sealing members may be separately arranged on the molded member and in an area where the molded member is not disposed on the rear surface of the display. The plurality of sealing members may be connected via a cure-in-place gasket (CIPG).

When the CIPG is applied to connect the respective sealing members to each other in the electronic device, repair of the display may not be easy. For example, when the display is separated from the electronic device for repair of the display and then the repaired display is placed on the electronic device, a process of re-arranging the CIPG on the electronic device is required to be performed, which may lead to additional time and costs for repair.

The technical tasks to be achieved herein may not be limited to the above-mentioned technical tasks, and other technical tasks not mentioned may be clearly understood, through the following descriptions, by those skilled in the art to which this document belongs.

### [Solution to Problem]

An electronic device according to an embodiment of the disclosure may include a housing and a display disposed in the housing. The display may include a transparent layer, a display panel disposed on a rear surface of the transparent layer, at least one layer disposed on a rear surface of the display panel, and a bendable portion extending from the display panel, at least a part of the bendable portion being disposed on a rear surface of the layer. The electronic device may include a molded member at least partially covering the bendable portion, the molded member including an inclined portion inclined with respect to the rear surface of the layer.

An electronic device according to an embodiment of the disclosure may include a housing and a display disposed in the housing. In an embodiment, the display may include a transparent layer, a display panel disposed on a rear surface of the transparent layer, at least one layer disposed on a rear surface of the display panel and including at least one recess, and a bendable portion extending from the display panel and disposed on a rear surface of the layer. In an embodiment, the layer may include a conductive layer which includes a conductive material and in which the recess is formed.

### [Advantageous Effects of Invention]

According to an embodiment disclosed herein, a closed-loop sealing member may be disposed on a rear surface of a display along the perimeter of an electronic device. A molded member may extend obliquely from the bendable portion toward an area where the molded member is not disposed on the rear surface of the display so that a step between an area where the molded member is disposed and the area where the molded member is not disposed is mitigated. In this case, a step between the bendable portion and an area where the bendable portion is not disposed on the rear surface of the display may be mitigated. Therefore, a plurality of sealing members may not be arranged with reference to the step, and the electronic device may not include a CIPG for connecting the plurality of sealing members. The electronic device can prevent moisture and/or foreign substances from being introduced into a space between a display and a housing by disposing one sealing member, which forms a closed loop along the perimeter of the electronic device, on the rear surface of the display.

In addition, the electronic device implements a waterproof function of the electronic device by disposing the sealing member on the molded member without the CIPG, and thus can reduce the cost required for manufacturing and arranging the CIPG.

In addition, since the electronic device does not include the CIPG, the display can be easily separated from the housing, and the time and cost required for display repair can be reduced.

The effects obtainable from the disclosure are not limited to the above-mentioned effects, and other effects not mentioned may be clearly understood by a person skilled in the art to which the disclosure belongs from the following description.

### [Brief Description of Drawings]

In relation to the description of drawings, the same or similar reference numerals may be used for the same or similar components.
FIG. 1 is a block diagram of an electronic device in a network environment, according to various embodiments of the disclosure;
FIG. 2A is a perspective view of a front surface of an electronic device, according to an embodiment of the disclosure;
FIG. 2B is a perspective view of a rear surface of the electronic device of FIG. 2A, according to an embodiment of the disclosure;
FIG. 3 is an exploded perspective view of the electronic device of FIG. 2A according to an embodiment of the disclosure;
FIG. 4 is an exploded perspective view of a display module according to various embodiments disclosed herein;
FIG. 5 is an assembly view of a display, a molded member, a sealing member, and a housing, according to an embodiment of the disclosure;
FIG. 6A is a view of a state in which a molded member is disposed on a rear surface of a display to cover a bendable portion connected to a display panel, according to an embodiment of the disclosure;
FIGS. 6B and 6C are views of a state in which a sealing member is disposed on a rear surface of a display;
FIG. 6D is a cross-sectional view taken along line 6d-6d of FIG. 6C;
FIG. 7A is a rear view of a display in a state in which a molded member is removed, according to an embodiment of the disclosure;
FIG. 7B is an enlarged view of a recess formed in a layer of FIG. 7A;
FIG. 7C is an enlarged view of a recess formed in a layer according to an embodiment of the disclosure;
FIG. 8A is an enlarged view of a state in which a molded member is disposed at a recess formed in a layer, according to an embodiment of the disclosure;
FIG. 8B is a cross-sectional view taken along line 8b-8b of FIG. 8A;
FIG. 9A is an enlarged view of a state in which a molded member is disposed at a recess formed in a layer, according to an embodiment of the disclosure;
FIG. 9B is a cross-sectional view taken along line 9b-9b of FIG. 9A;
FIG. 10A is an enlarged view of a state in which a molded member is disposed on a rear surface of a display in an embodiment in which a recess is not formed in a layer, according to an embodiment of the disclosure;
FIG. 10B is a cross-sectional view taken along line 10b-10b of FIG. 10A; and
FIGS. 11A and 11B are views of a state in which a molded member is disposed on a rear surface of a curved display.

### [Mode for the Invention]

It should be appreciated that various embodiments of the present disclosure and the terms used therein are not intended to limit the technological features set forth herein to particular embodiments and include various changes, equivalents, or replacements for a corresponding embodiment.

With regard to the description of the drawings, similar reference numerals may be used to refer to similar or related elements. It is to be understood that a singular form of a noun corresponding to an item may include one or more of the things, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

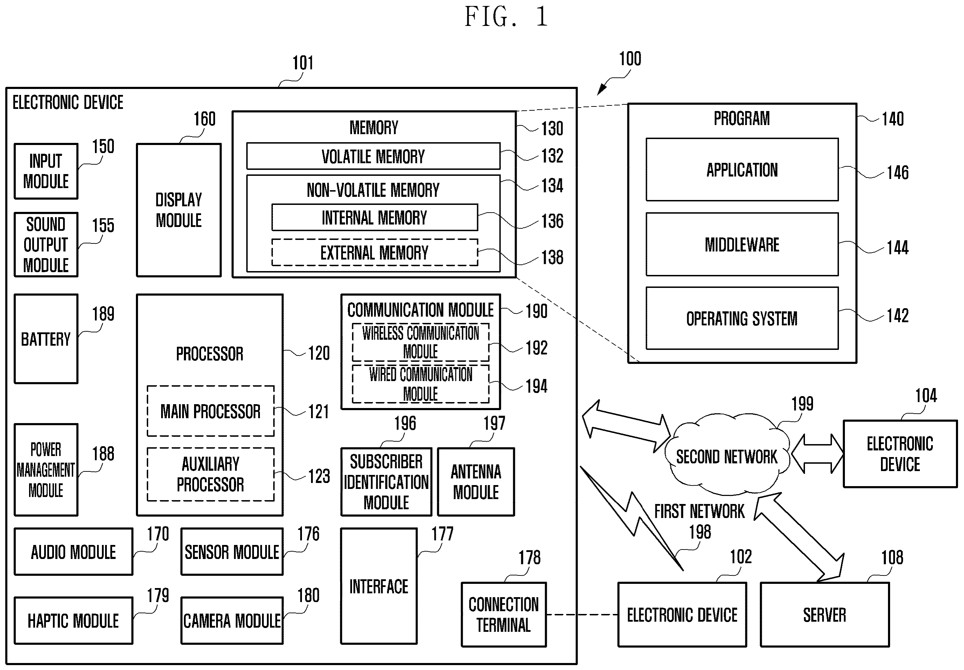

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or loT-related technology.

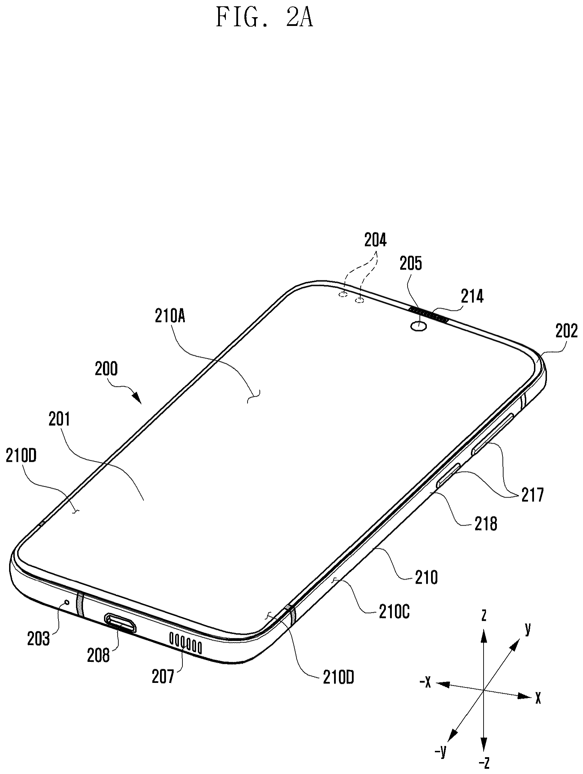

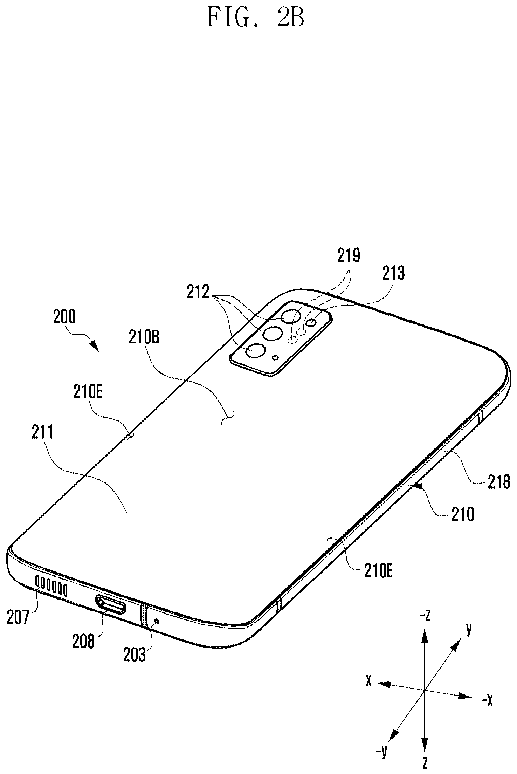

FIG. 2A is a front perspective view of an electronic device according to various embodiments of the disclosure. FIG. 2B is a rear perspective view of the electronic device of FIG. 2A according to various embodiments of the disclosure.

The electronic device 200 to be described below may include at least one of the components of the electronic device 101 described above with reference to FIG. 1.

With reference to FIG. 2A and FIG. 2B, the electronic device 200 according to an embodiment may include a housing 210 that includes a first surface (or front surface) 210A, a second surface (or rear surface) 210B, and a side surface 210C surrounding a space between the first surface 210A and the second surface 210B. According to an embodiment (not shown), the housing 210 may refer to a structure forming a part of the first surface 210A, the second surface 210B, and the side surface 210C in FIG. 2A. According to an embodiment, the first surface 210A may be formed by a front plate 202 (e.g., glass plate or polymer plate including various coating layers) whose at least a portion is substantially transparent. The second surface 210B may be formed by a rear plate 211 that is substantially opaque. The rear plate 211 may be formed by, for example, coated or tinted glass, ceramic, polymer, metal (e.g., aluminum, stainless steel (STS), or magnesium), or a combination of at least two thereof. The side surface 210C may be formed by a side bezel structure (or "side member") 218 coupled to the front plate 202 and the rear plate 211 and including a metal and/or a polymer. In a certain embodiment, the rear plate 211 and side bezel structure 218 may be integrally formed and include the same material (e.g., metal material such as aluminum).

In the illustrated embodiment, the front plate 202 may include a first region 210D that is curved and seamlessly extended from the first surface 210A toward the rear plate at opposite ends of the longer edge of the front plate 202. In the illustrated embodiment (see FIG. 2B), the rear plate 211 may include a second region 210E that is curved and seamlessly extended from the second surface 210B toward the front plate 202 respectively at opposite ends of the longer edge. In a certain embodiment, the front plate 202 or the rear plate 211 may include only one of the first region 210D and the second region 210E. In a certain embodiment, the front plate 202 may not include the first region and the second region, but may include only a flat surface disposed parallel to the second surface 210B. In the above embodiments, when the electronic device is viewed from the side thereof, the side bezel structure 218 may have a first thickness (or width) on a side where the first region 210D or the second region 210E is not included, and may have a second thickness thinner than the first thickness on a side where the first region 210D or the second region 210E is included.

According to an embodiment, the electronic device 200 may include at least one or more of display 201, input device 203, sound output devices 207 and 214, sensor modules 204 and 219, camera modules 205 and 212, key input device 217, indicator (not shown), or connector 208. In a certain embodiment, at least one of the elements (e.g., key input device 217 or indicator) may be omitted from the electronic device 200, or another element may be added to the electronic device 200.

The display 201 may be exposed, for example, through a significant portion of the front plate 202. In a certain embodiment, at least a portion of the display 201 may be exposed through the front plate 202 forming the first surface 210A and the first region 210D of the side surface 210C. The display 201 may be coupled to or disposed adjacent to a touch sensing circuit, a pressure sensor capable of measuring the intensity (pressure) of a touch, and/or a digitizer that detects a magnetic field type stylus pen. In a certain embodiment, at least some of the sensor modules 204 and 219, and/or at least some of the key input devices 217 may be disposed on the first region 210D and/or the second region 210E.

The input device 203 may include a microphone 203. In a certain embodiment, the input device 203 may include a plurality of microphones 203 arranged to detect the direction of a sound. The sound output devices 207 and 214 may include speakers 207 and 214. The speakers 207 and 214 may include an external speaker 207 and a call receiver 214. In a certain embodiment, the microphone 203, the speakers 207 and 214, and the connector 208 may be at least partially disposed in the internal space of the electronic device 200, and may be exposed to the external environment through at least one hole formed in the housing 210. In a certain embodiment, the hole formed in the housing 210 may be commonly used for the microphone 203 and the speakers 207 and 214. In a certain embodiment, the sound output devices 207 and 214 may include a speaker (e.g., piezo speaker) that operates in isolation from the hole formed in the housing 210.

The sensor modules 204 and 219 may generate an electrical signal or a data value corresponding to an internal operating state of the electronic device 200 or an external environmental state. The sensor modules 204 and 219 may include, for example, a first sensor module 204 (e.g., proximity sensor) and/or a second sensor module (not shown) (e.g., fingerprint sensor) disposed on the first surface 210A of the housing 210, and/or a third sensor module 219 (e.g., HRM(heart rat monitor) sensor) disposed on the second surface 210B of the housing 210. The fingerprint sensor may be disposed on the first surface 210A (e.g., home key button) of the housing 210, on a portion of the second surface 210B, and/or under the display 201. The electronic device 200 may further include a sensor module which is not shown, for example, at least one of a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, a proximity sensor, or an illuminance sensor.

The camera modules 205 and 212 may include a first camera module 205 disposed on the first surface 210A of the electronic device 200, a second camera module 212 disposed on the second surface 210B, and/or a flash 213. The camera modules 205 and 212 may include one or plural lenses, an image sensor, and/or an image signal processor. The flash 213 may include, for example, a light emitting diode or a xenon lamp. In a certain embodiment, two or more lenses (wide-angle lens, ultra-wide-angle lens, or telephoto lens) and image sensors may be arranged in one surface of the electronic device 200.

The key input devices 217 may be arranged in the side surface 210C of the housing 210. According to an embodiment, the electronic device 200 may not include some or all of the above-mentioned key input devices 217, and a key input device 217 not included may be implemented on the display 201 in a different form such as a soft key. According to an embodiment, the key input devices 217 may be implemented using a pressure sensor included in the display 201.

The indicator may be disposed on, for example, the first surface 210A of the housing 210. The indicator may provide, for example, state information of the electronic device 200 in a light form (e.g., light emitting element). According to an embodiment, the light emitting element may provide a light source interacting with, for example, the operation of the camera module 205. The indicator may include, for example, an LED(light emitting diode), an IR(infrared) LED, and/or a xenon lamp.

The connector holes 208 may include a first connector hole 208 capable of accepting a connector (e.g., universal serial bus (USB) connector) for transmitting and receiving power and/or data to and from an external electronic device, and/or a second connector hole (e.g., earphone jack) (not shown) capable of accepting a connector for transmitting and receiving an audio signal to and from an external electronic device.

Some of the camera modules 205 and 212, some of the sensor modules 204 and 219, or the indicator may be disposed to be exposed through the display 201. For example, the camera module 205, the sensor module 204, or the indicator may be arranged in the internal space of the electronic device 200 so as to be in contact with the external environment through an opening of the display 201 perforated up to the front plate 202 or a transmissive region. According to an embodiment, the region in which the display 201 and the camera module 205 face each other may be formed as a transmissive region having a preset transmittance as a part of the content display area. According to an embodiment, the transmissive region may be formed to have a transmittance in a range of about 5 percent to about 20 percent. This transmissive region may include a region overlapping an effective area (e.g., angle-of-view area) of the camera module 205 through which light passes for image generation with an image formed by an image sensor. For example, the transmissive region of the display 201 may include a region having a lower pixel density than surrounding regions. For example, the transmissive region may replace the opening. For example, the camera module 205 may include an under display camera (UDC). According to an embodiment, a certain sensor module 204 may be disposed in the internal space of the electronic device so as to perform its function without being visually exposed through the front plate 202. For example, in this case, the region of the display 201 facing the sensor module may not need a perforated opening.

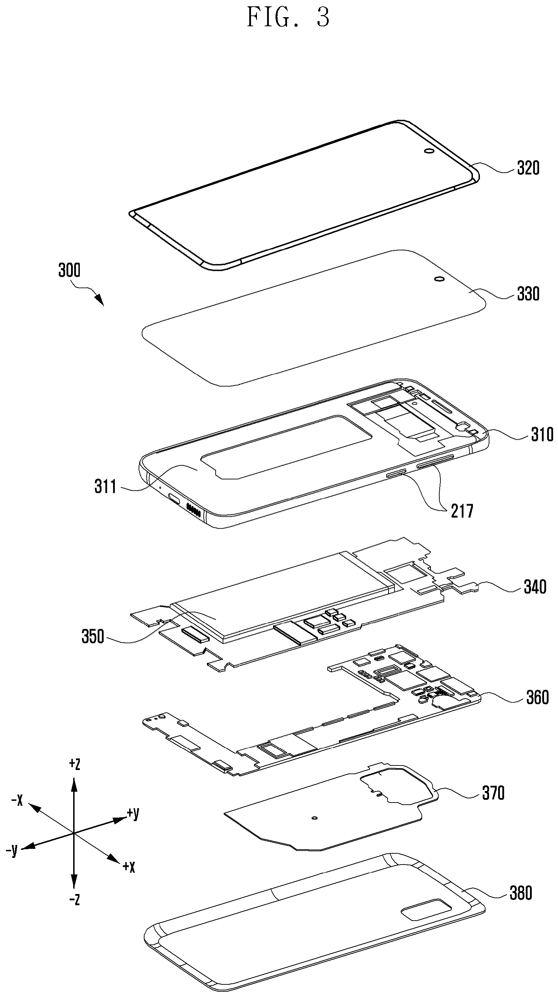

According to one embodiment, the electronic device (200) has a bar type or plate type appearance, but the present invention is not limited thereto. For example, the illustrated electronic device (200) may be part of a foldable electronic device, a slidable electronic device, a stretchable electronic device, and/or a rollable electronic device. The terms "foldable electronic device", "slidable electronic device", "stretchable electronic device" and/or "rollable electronic device" may refer to an electronic device in which a display (e.g., a display (330) of FIG. 3) is capable of bending deformation, such that at least a portion thereof is folded, wound or rolled, at least a portion thereof is expanded, and/or the display can be housed inside a housing (e.g., a housing (210) of FIGS. 2A and 2B). The foldable electronic device, the slidable electronic device, the stretchable electronic device and/or the rollable electronic device can be used by expanding the screen display area by unfolding the display or exposing a wider area of the display to the outside, depending on the needs of the user.

FIG. 3 is an exploded perspective view of the electronic device 200 of FIG. 2A according to various embodiments of the disclosure.

The electronic device 300 of FIG. 3 may be at least partially similar to the electronic device 200 of FIGS. 2A and 2B, or may include other embodiments of an electronic device.

With reference to FIG. 3, the electronic device 300 (e.g., electronic device 200 in FIG. 2A or 2B) may include a side member 310 (e.g., side bezel structure), a first support member 311 (e.g., bracket or support structure), a front plate 320 (e.g., front cover)(e.g., front plate 202 in FIG. 2A), a display 330 (e.g., display 201 in FIG. 2A), a board 340 (e.g., printed circuit board (PCB), flexible PCB (FPCB), or rigid-flexible PCB (RFPCB)), a battery 350, a second support member 360 (e.g., rear case), an antenna 370, and a rear plate 380 (e.g., rear cover)( e.g., rear plate 211 in FIG. 2B). In a certain embodiment, at least one of the components (e.g., first support member 311 or second support member 360) may be omitted from the electronic device 300 or other components may be additionally included therein. At least one of the components of the electronic device 300 may be the same as or similar to at least one of the components of the electronic device 200 of FIG. 2A or 2B, and repeated descriptions will be omitted below.

The first support member 311 may be disposed inside the electronic device 300 and may be connected to the side member 310 or may be integrally formed with the side member 310. The first support member 311 may be made of, for example, a metal material and/or a non-metal (e.g., polymer) material. The first support member 311 may have one surface coupled to the display 330 and the other surface coupled to the board 340. A processor (e.g., processor 120 in FIG. 1), a memory (e.g., memory 130 in FIG. 1), and/or an interface (e.g., interface 177 in FIG. 1) may be mounted on the board 340. The processor may include, for example, one or more of a central processing unit, an application processor, a graphics processing unit, an image signal processor, a sensor hub processor, and a communication processor.

The memory may include, for example, a volatile memory or a non-volatile memory.

The interface may include, for example, a high definition multimedia interface (HDMI), a universal serial bus (USB) interface, an SD (secure digital) card interface, and/or an audio interface. The interface may, for example, electrically or physically connect the electronic device 300 to an external electronic device, and may include a USB connector, an SD card/MMC (multimedia card) connector, or an audio connector.

The battery 350 is a device for supplying power to at least one component of the electronic device 300, and may include, for example, a non-rechargeable primary cell, a rechargeable secondary cell, or a fuel cell. At least a portion of the battery 350 may be disposed substantially coplanar with the board 340, for example. The battery 350 may be integrally disposed inside the electronic device 300. According to an embodiment, the battery 350 may be disposed attachably and detachably with the electronic device 300.

The antenna 370 may be disposed between the rear plate 380 and the battery 350. The antenna 370 may include, for example, a near field communication (NFC) antenna, a wireless charging antenna, and/or a magnetic secure transmission (MST) antenna. The antenna 370 may, for example, perform short-range communication with an external device or wirelessly transmit and receive power required for charging. According to an embodiment, an antenna structure may be formed by a part of the side bezel structure 310 and/or the first support member 311 or a combination thereof.

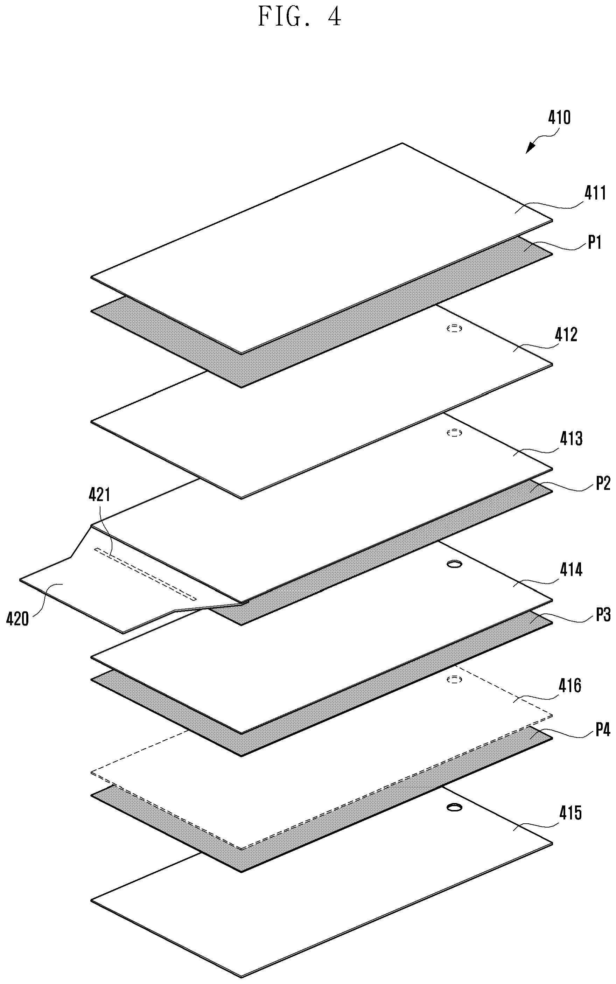

FIG. 4 is an exploded perspective view of a display according to various embodiments disclosed herein.

In the following description, a display 410 (e.g., the display module 160 of FIG. 1 or the display 201 of FIG. 2A) may refer to a device for visually displaying information. The display 410 may be understood as a set of components for visually displaying information. The components of the display 410 shown in FIG. 4 are merely one example of the components included in the display 410, and the display 410 may be configured by omitting some of the components shown in FIG. 4, and the display 410 may be configured by adding components other than the components shown in FIG. 4.

The display 410 may include a flat type display panel 413 employing an on cell touch active matrix organic light-emitting diode (AMOLED) (OCTA). In addition, the display 410 may include an unbreakable (UB) type OLED display (e.g., a curved display) panel 413. In addition, a light-emitting element configuring the display panel 413 may be implemented as an inorganic light-emitting element manufactured using an inorganic material, different from an organic light-emitting diode (OLED) manufactured using an organic material. According to various embodiments, the light-emitting element may be a micro light-emitting diode (LED) (u-LED). The micro LED may refer to a subminiature inorganic light-emitting element having a size of 100 micrometers (µm) or less and emitting light by itself without a backlight or a color filter.

Referring to FIG. 4, the display 410 may include a window layer 411, a polarizing layer 412 (polarizer (POL)) (e.g., a polarizing film) sequentially disposed on a rear surface of the window layer 411, a display panel 413, a polymer layer 414, and a conductive layer 415. In some embodiments, the display panel 413 may include a digitizer panel 416 disposed between the polymer layer 414 and the conductive layer 415 or on a rear surface of the conductive layer 415.

According to various embodiments, the window layer 411 may include a glass layer. According to an embodiment, the window layer 411 may include ultra-thin glass (UTG). In some embodiments, the window layer 411 may include a polymer. In this case, the window layer 411 may include polyethylene terephthalate (PET) or polyimide (PI). In some embodiments, the window layer 411 may be disposed in multiple layers to include a glass layer and a polymer.

According to an embodiment, the window layer 411, the polarizing layer 412, the display panel 413, the polymer layer 414, and the conductive layer 415 may be attached to each other through sticking agents P1, P2, P3, and P4 (or adhesives). For example, the sticking agents P1, P2, P3, and P4 may include at least one of an optical clear adhesive (OCA), a pressure sensitive adhesive (PSA), a heat-reactive adhesive, a general adhesive, or a double-sided tape.

According to various embodiments, the display panel 413 may include multiple pixels and a wiring structure (e.g., an electrode pattern). According to an embodiment, the polarizing layer 412 may selectively pass light generated from a light source of the display panel 413 and vibrating in a predetermined direction. According to an embodiment, the display panel 413 and the polarizing layer 412 may be integrally configured. According to an embodiment, the display panel 413 may include a touch panel (not shown). Components included in the display panel 413 may be disposed on a substrate of the display panel 413. The substrate of the display panel may be made of a rigid material such as glass. In some embodiments, the substrate of the display panel may be made of a flexible material. For example, the substrate may be made of a flexible material such as polyimide (PI), polyethylene terephthalate (PET), or ultra-thin glass (UTG).

According to various embodiments, the polymer layer 414 may be disposed under the display panel 413 to provide a dark background for securing visibility of the display panel 413, and may be made of a buffer material (e.g., a cushion) for a buffering action. For example, the polymer layer 414 may include an opaque metal layer (e.g., a black layer having an uneven pattern) for removing air bubbles which may be generated between the display panel 413 and lower attachments thereof and blocking light generated in the display panel 413 or light incident light from the outside, and/or a buffer layer (e.g., a sponge layer) disposed to mitigate impact. In some embodiments, for waterproofing of the display 410, the polymer layer 414 may be removed or disposed under the conductive layer 415.

According to an embodiment, the conductive layer 415 may include at least one of steel use stainless (SUS) (e.g., stainless steel (STS)), Cu, Al, or a metal CLAD (e.g., a layer in which SUS and Al are alternately disposed). In some embodiments, the conductive layer 415 may include other alloy materials. In some embodiments, the conductive layer 415 may help reinforce the stiffness of an electronic device (e.g., the electronic device 101 of FIG.1, the electronic device 200 of FIG. 2A, and/or the electronic device 300 of FIG. 3), and may be used to shield ambient noise and dissipate heat emitted from a surrounding heat emission component. Although FIG. 4 illustrates that the conductive layer 415 is formed to have the same area as the display panel 413, in some embodiments, the conductive layer 415 may be disposed on a part of the display panel 413. In some cases, the conductive layer 415 may be omitted.

According to an embodiment, the digitizer panel 416 may be disposed between the conductive layer 415 and the polymer layer 414. In some cases, the digitizer panel 416 may be disposed under the conductive layer 415. The digitizer panel 416 may be a detection member configured to an input from a pen input device (e.g., a stylus). In an embodiment, the digitizer panel 416 may include a plurality of conductive patterns (not shown). For example, the digitizer panel 416 may include a plurality of conductive loops. A current flowing through the plurality of conductive loops may form a magnetic field. When an external electronic device (e.g., a stylus) including a coil approaches the magnetic field formed by the digitizer panel 416, a resonant frequency may be generated. The resonant frequency may be determined according to the inductance and capacitance of the external electronic device. A digitizer circuit configured to control an operation of the digitizer panel 416 may recognize a specific frequency and a location where the specific frequency is recognized by using the plurality of conductive loops included in the digitizer panel 416. For example, when the pen input device approaches the digitizer panel 416, the digitizer circuit may identify the occurrence and an occurrence location of a resonant frequency of the pen input device. Through this, a pen input of the pen input device may be recognized.

According to an embodiment, the display 410 may include at least one functional member (not shown) disposed between the polymer layer 414 and the conductive layer 415 or disposed under the conductive layer 415. According to an embodiment, the functional member may include a graphite sheet for heat dissipation, a touch sensor which supports a touch function of the display 410, a force touch FPCB, a fingerprint sensor FPCB, an antenna radiator for communication, or a conductive/non-conductive tape.

According to an embodiment, the display 410 may include a first connection member 420 (e.g., a bendable portion) disposed in a manner (e.g., bending) of being folded from the display panel 413 toward at least a partial area of a rear surface of the display 410. According to an embodiment, the first connection member 420 may be electrically connected to the display panel 413. The first connection member 420 may include a control circuit (e.g., a display driver IC (DDI)) 501. A second connection member (not shown) connected to the first connection member 420 may include a touch display driver IC (TDDI) (not shown). In some embodiments, the first connection member 420 connected to the display panel 413 may include both the control circuit 421 and the TDDI.

In an embodiment, the first connection member 420 may be configured integrally with the substrate of the display panel 413. The first connection member 420 may be a part of the substrate on which a light-emitting element of the display panel 413 is disposed. The first connection member 420 may include a part which extends from the substrate of the display panel 413 and is at least partially deformed to extend to a rear surface of the display panel 413. In an embodiment, the display 410 may include a chip on panel (COP) structure in which the control circuit 421 is disposed in the first connection member 420 configured integrally with the substrate of the display panel 413.

In an embodiment, the first connection member 420 may be formed separately from the substrate of the display panel 413 and electrically connected to the display panel 413. In this case, the first connection member 420 may be a printed circuit board (e.g., a flexible printed circuit board (FPCB)) made of a flexible material. A part of the first connection member 420 connected to the display panel 413 may be deformed to extend to the rear surface of the display panel 413. In an embodiment, the display 410 may include a chip on film (COF) structure in which the control circuit 421 is disposed in the first connection member 420 electrically connected to the display panel 413.

According to various embodiments, various elements related to driving the display 410 may be arranged on the first connection member 420. For example, a passive element such as flash memory for displays, an electrostatic discharge (ESD) protection diode, a pressure sensor, and/or a decap may be arranged on the first connection member 420. For example, an active element such as a display driver integrated circuit (DDI) may be arranged on the first connection member 420.

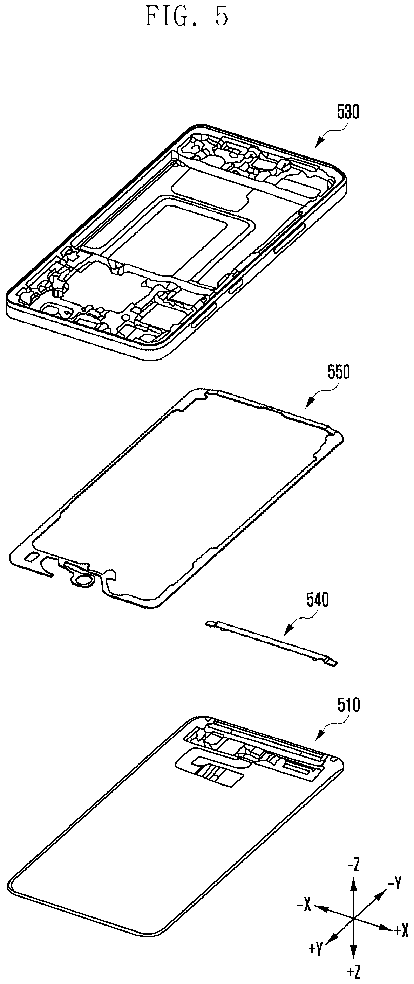

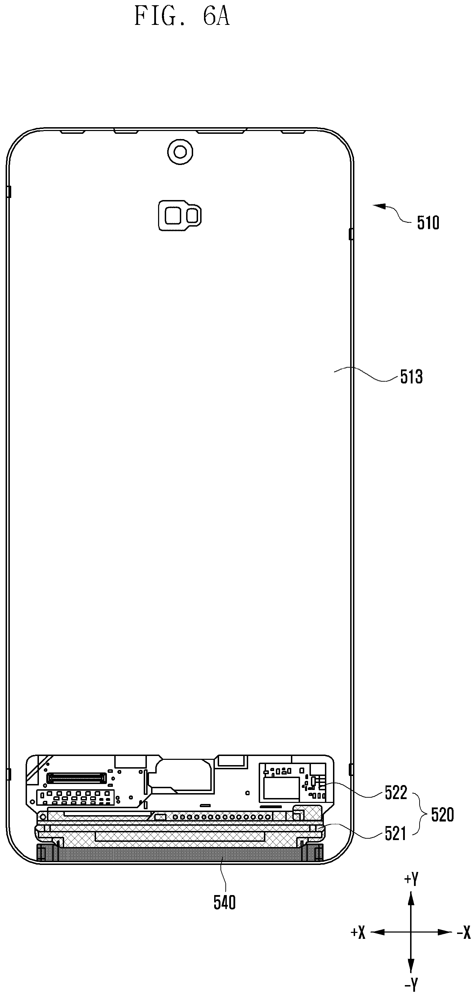

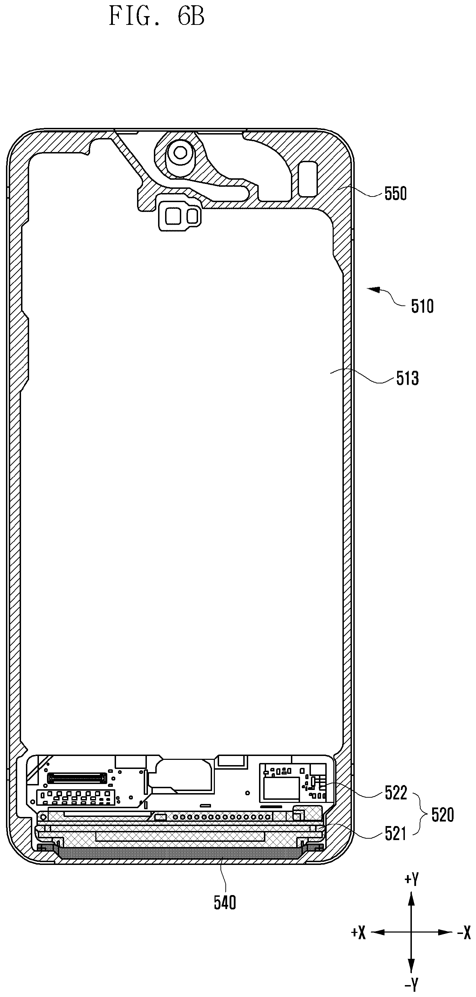

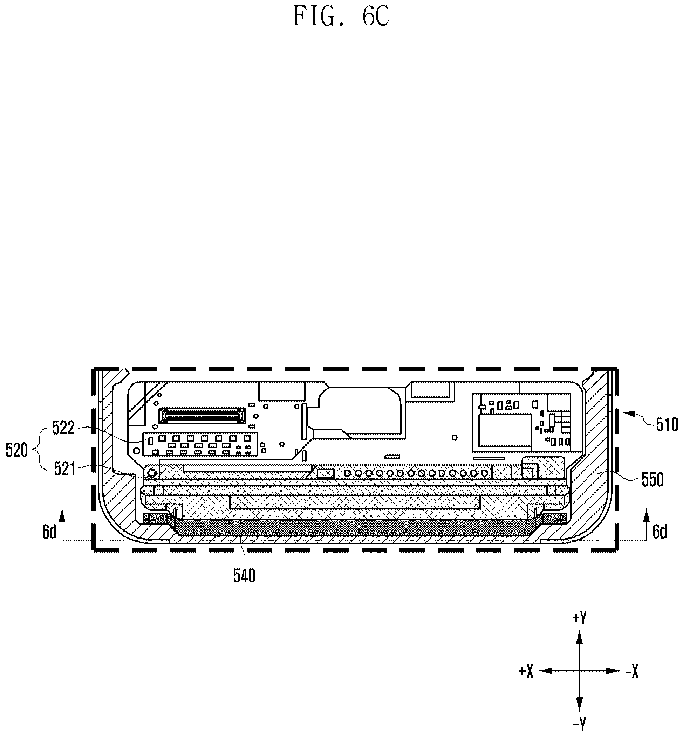

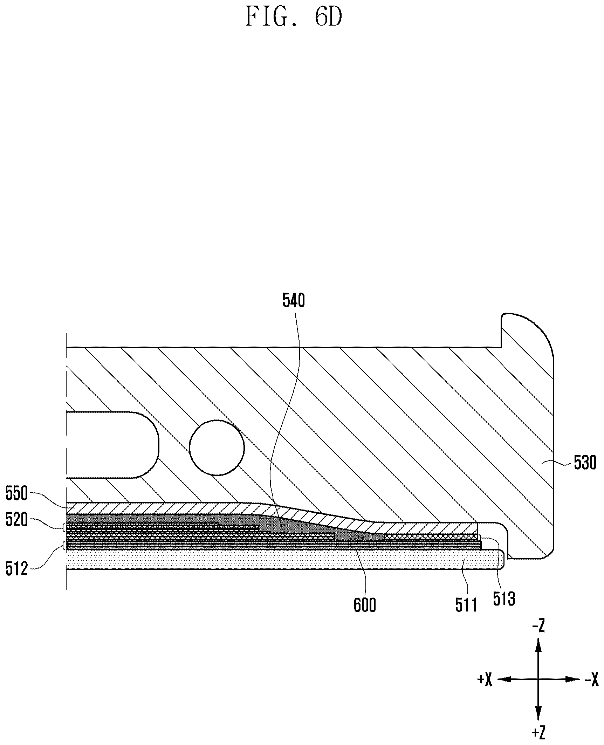

FIG. 5 is an assembly view of a display, a molded member, a sealing member, and a housing according to an embodiment of the disclosure. FIG. 6A is a view of a state in which a molded member is disposed on a rear surface of a display to cover a bendable portion connected to a display panel, according to an embodiment of the disclosure. FIGS. 6B and 6C are views of a state in which a sealing member is disposed on a rear surface of a display. FIG. 6D is a cross-sectional view taken along line 6d-6d of FIG. 6C.

Hereinafter, in describing a display 510 (e.g., the display module 160 of FIG. 1, the display 201 of FIG. 2A, and/or the display 410 of FIG. 4), the window layer 411 and the polarizing layer 412 located on a display panel 512 (e.g., the display panel 413 of FIG. 4) are described as a transparent layer 511, and the polymer layer 414 and the conductive layer 415 located under the display panel 512 are described as a layer 513. In an embodiment, the display 510 may have a structure in which the transparent layer 511, the display panel 512, and the layer 513 are laminated. In other words, the display panel 512 may be disposed on a rear surface (e.g., a surface facing the -Z direction in FIG. 6D) of the transparent layer 511, and at least one layer 513 may be disposed on a rear surface (e.g., a surface facing the -Z direction in FIG. 6D) of the display panel 512. The at least one layer 513 is disposed on the rear surface of the display panel 512 and may be a plurality of components constituting the display 510. For example, the layer 513 may be the polymer layer 414 and/or the conductive layer 415.

In an embodiment, one of the window layer 411 and the polarizing layer 412 may be omitted from the transparent layer 511 or at least one layer may be added. In an embodiment, the transparent layer 511 may be replaced by a glass layer, a protective cover layer, a cover member, or a window layer. The glass layer, the protective cover layer, and the cover member may include at least one of the window layer 411 and the polarizing layer 412.

In an embodiment, one of the polymer layer 414 and the conductive layer 415 may be omitted from the at least one layer 513 or at least one layer may be added. In an embodiment, a component (e.g., an electronic component and/or an adhesive layer) constituting the display 510 may be additionally disposed between the transparent layer 511 and the display panel 512. Similarly, at least one component (e.g., an electronic component and/or an adhesive layer) constituting the display 510 may be additionally disposed between the display panel 512 and the at least one layer 513.

According to an embodiment of the disclosure, as illustrated in FIGS. 5 and 6A to 6D, an electronic device 500 (e.g., the electronic device 101 of FIG. 1, the electronic device 200 of FIG. 2A, and/or the electronic device 300 of FIG. 3) may include a waterproof structure disposed between a housing 530 (e.g., the housing 210 of FIG. 2A) and the display 510. In an embodiment, the waterproof structure may include a sealing member 550 and a molded member 540.

According to an embodiment, as illustrated in FIGS. 6B and 6C, the sealing member 550 (e.g., a waterproof tape) may be disposed between the display 510 and the housing 530 along the perimeter of the display 510 and bonded to a rear surface of the display 510 and the housing 530. The sealing member 550 may form at least one waterproof space between the rear surface of the display 510 and the housing 530. In an embodiment, the waterproof space may receive at least a part of a bendable portion 520 (e.g., the first connection member 420 of FIG. 4) connected to the display panel 512 and folding toward the rear surface of the display 510. In an embodiment, the bendable portion 520 may be disposed on one surface (e.g., a rear surface, a surface facing the -Z direction in FIG. 6D) of the at least one layer 513 disposed on the rear surface of the display 510. In an embodiment, a rear surface of the layer 513 may be the rear surface of the display 510. Accordingly, a control circuit (e.g., the control circuit 421 of FIG. 4) disposed in the bendable portion 520 and a plurality of electrical elements (not shown) disposed on the rear surface of the display 510 may be disposed in a waterproof space formed by the sealing member 550, and thus protected from moisture and/or foreign substances introduced from the outside of the electronic device 500.

In an embodiment, the sealing member 550 may be a waterproof tape including a waterproof material. For example, the sealing member 550 may include at least one material among polyethylene, polypropylene, vinyl, polyester, acrylic, rubber, and silicone. In an embodiment, the sealing member 550 may prevent or reduce the introduction of moisture and/or foreign substances from the outside of the electronic device 500 to the inside of the electronic device 500.

According to an embodiment, as illustrated in FIGS. 5 and 6A to 6D, the electronic device 500 may include the molded member 540 disposed on the rear surface of the display 510.

In an embodiment, the molded member 540 may be at least partially disposed on the rear surface of the display 510 to cover a part of the bendable portion 520 and the layer 513 (e.g., the polymer layer 414 and the conductive layer 415) disposed on the rear surface of the display 510.

According to an embodiment, the molded member 540 may be disposed in the bendable portion 520, the layer 513, and a recess 600 through insert injection molding. In an embodiment, the molded member 540 may be formed in a manner in which a molding liquid injected through a molding injector is cured. For example, the molding liquid may be cured through at least one of natural curing, thermal curing, or ultraviolet curing. In an embodiment, the molding liquid may be applied to the rear surface of the display 510, and may be applied from the rear surface of the display 510 up to the bendable portion 520 and an area of the layer 513 adjacent to the bendable portion 520.

According to an embodiment, as illustrated in FIG. 6D, the molded member 540 may mitigate a step between components (e.g., the bendable portion 520 and the plurality of electrical elements) arranged on the rear surface of the display 510. For example, the bendable portion 520 is disposed on one surface (e.g., a rear surface) of the layer 513 on the rear surface of the display 510, and thus may protrude with respect to one surface (e.g., a rear surface) of the layer 513. In this case, a step due to a height difference (e.g., a length difference in the Z-axis direction in FIG. 6D) may occur between one surface (e.g., a rear surface) of the layer 513 and the bendable portion 520. The molded member 540 may be disposed to cover one surface (e.g., a rear surface) of the layer 513 and the bendable portion 520, and thus mitigate a step between the bendable portion 520 and the layer 513.

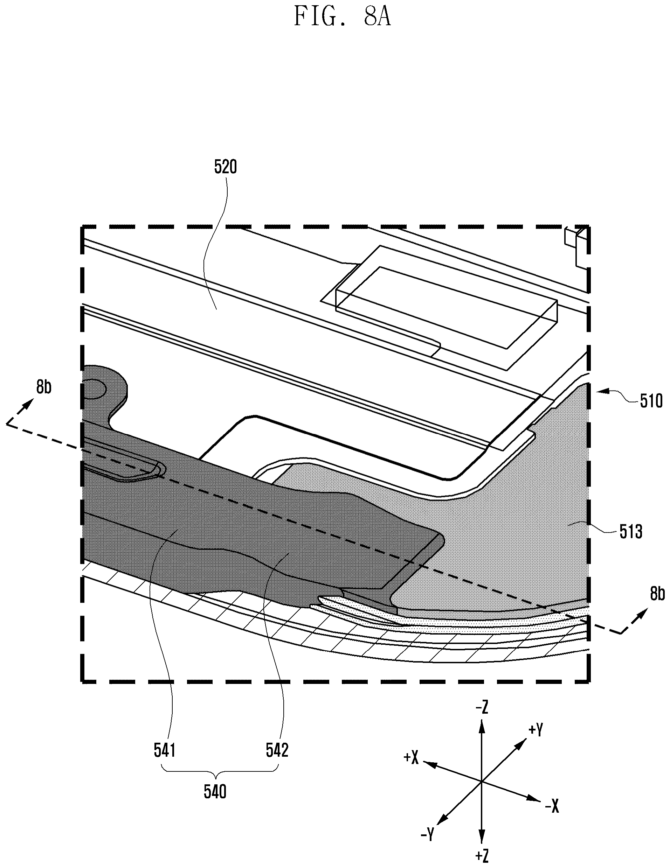

In an embodiment, referring to FIG. 6D and FIG. 8A to be described below, the molded member 540 may include a cover portion 541 and an inclined portion 542. In an embodiment, the cover portion 541 may be parallel to the rear surface of the layer 513 or may be at least partially curved with respect to the rear surface of the layer 513. In an embodiment, the inclined portion 542 may be configured at one end part (e.g., a part facing the -X direction in FIG. 6C) of the cover portion 541 and the other end part (e.g., a part facing the +X direction in FIG. 6C) thereof.

In an embodiment, the cover portion 541 of the molded member 540 may overlap with the bendable portion 520 disposed on the rear surface of the display 510. For example, the cover portion 541 may cover at least a part of the bendable portion 520. In an embodiment, the inclined portion 542 may be configured to be inclined toward the layer 513 from one end part and/or the other end part of the cover portion 541 disposed on the bendable portion 520, and thus mitigate a step between the bendable portion 520 and the layer 513. The sealing member 550 may extend from the cover portion 541 of the molded member 540 to the layer 513 along the inclined portion 542. In particular, the sealing member 550 may be bonded in close contact with the cover portion 541 and/or the inclined portion 542 of the molded member 540.

According to an embodiment, as illustrated in FIGS. 6B to 6D, the electronic device 500 may include a closed-loop shaped sealing member 550 disposed along the perimeter of the display 510 as the step between the bendable portion 520 and the layer 513 is mitigated through the inclined portion 542 of the molded member 540. For example, the sealing member 550 may be a single-shaped waterproof tape which is not segmented into multiple parts. Therefore, the sealing member 550 may be disposed on one surface (e.g., a rear surface) of the layer 513 and one surface of the molded member 540 along the perimeter of the display 510 on the rear surface of the display 510 to seal a space between the display 510 and the housing 530. Therefore, the sealing member 550 may block or reduce moisture and/or foreign substances which may be introduced between the display 510 and the housing 530.

In an embodiment, the sealing member 550 may be configured to have a uniform thickness. In an embodiment, the sealing member 550 may be configured to be relatively thinner in some areas than in other areas depending on an area where the sealing member is disposed.

In a comparative embodiment not shown in the drawings, when the inclined portion 542 is not disposed on the molded member 540, a separation space may be formed between the sealing member 550 and the rear surface of the display 510 due to a step between the bendable portion 520 and the rear surface (e.g., the rear surface of the layer 513) of the display 510. According to an embodiment of the disclosure, since the molded member 540 includes the inclined portion 542, the molded member 540 may extend to one surface (e.g., a rear surface) of the layer 513 located on the rear surface of the display 510 through the inclined portion 542. Therefore, the sealing member 550 may be in close contact with the cover portion 541 of the molded member 540, the inclined portion 542, and the rear surface of the layer 513. Therefore, since no separation space is formed between the sealing member 550 and the rear surface (e.g., the rear surface of the layer 513) of the display 510, the space between the rear surface of the display 510 and the housing 530 may be sealed through the sealing member 550.

In an embodiment, at least one surface of the inclined portion 542 and the cover portion 541 of the molded member 540 may be formed to be smoothly connected to each other. For example, an angle may be formed by at least one surface of the inclined portion 542 and the cover portion 541 of the molded member 540. For example, the angel may be formed to be 135 degrees to 175 degrees. For example, the angle may be formed to be 140 degrees to 170 degrees. For example, the angle may be formed to be 145 degrees to 165 degrees. For example, the angle may be formed to be 150 degrees to 160 degrees. In an embodiment, the inclined portion 542 may be formed to have an inclination with respect to the rear surface of the layer 513. For example, the inclination may be of about 20 degrees to about 30 degrees. For example, the inclination may be of about 25 degrees to about 35 degrees. For example, the inclination may be of about 30 degrees to about 40 degrees. For example, the inclination may be of about 35 degrees to about 45 degrees. For example, the inclination may be of about 40 degrees to about 50 degrees.

In an embodiment, the sealing member 550 may form one closed loop as a single sealing member 550 without being cut into multiple parts. In this case, the electronic device 500 may not include a cure-in-place gasket (CIPG) for connecting a plurality of sealing members 550, and a waterproof function of the electronic device 500 may be implemented by disposing the sealing member 550 on the molded member 540. Therefore, the time and cost required for a process of applying the CIPG to the electronic device 500 may be reduced. In addition, since the electronic device 500 has a structure that does not include the CIPG, the display 510 may be easily separated from the housing 530.

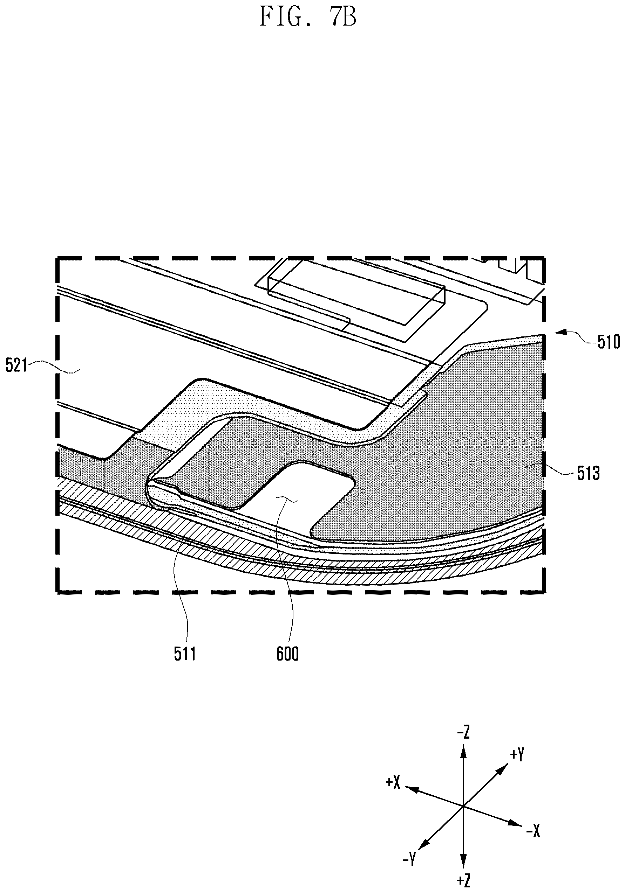

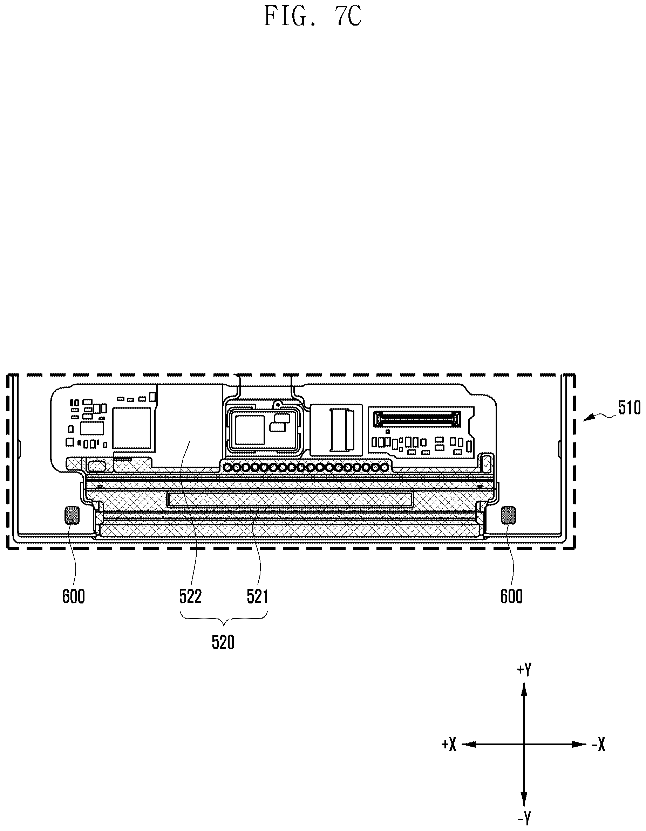

According to an embodiment, the bendable portion 520 may include an extension part 521 including a control circuit (e.g., the control circuit 421 of FIG. 4) of the display 510 and a flexible substrate 522 electrically connected to the extension part 521 and positioned in the + Y direction in FIG. 6A with respect to the extension part 521. In an embodiment, the molded member 540 may be disposed on the rear surface of the display 510 such that the cover portion 541 covers a part of the extension part 521. For example, the molded member 540 may extend in the X-axis direction in FIG. 6A to cover at least a part of the extension part 521. Referring to FIGS. 7B and 7C to be described below, the recess 600 may be disposed in an area of the layer 513 adjacent to one end part of the extension part 521 and in an area of the layer 513 adjacent to the other end part of the extension part 521.

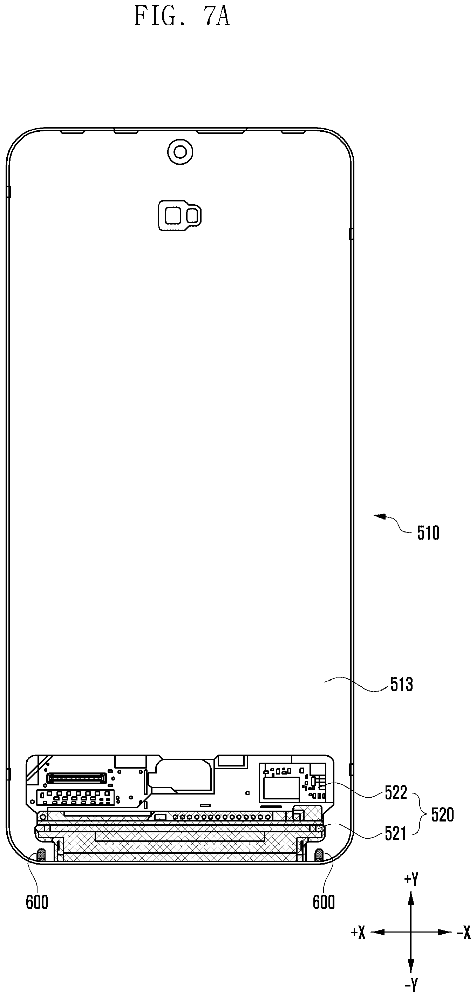

FIG. 7A is a rear view of a display in a state in which a molded member is removed, according to an embodiment of the disclosure. FIG. 7B is an enlarged view of a recess formed in a layer of FIG. 7A. FIG. 7C is an enlarged view of a recess formed in a layer according to an embodiment of the disclosure.

According to an embodiment, the molded member 540 may include the inclined portion 542. In an embodiment, the inclined portion 542 of the molded member 540 may be inclined toward an area of a rear surface (e.g., a surface facing the -Z direction in FIG. 7B) of the layer 513 adjacent to the bendable portion 520 with respect to the bendable portion 520. A molding liquid may be applied obliquely toward the layer 513 from the bendable portion 520 through a molding injector. However, the thickness of the molding liquid may decrease as the molding liquid is applied from the bendable portion 520 toward one surface of the layer 513. In this case, when the molding liquid is cured, an end part of the molded member 540 disposed on one surface of the layer 513 may have an unmolded section. The unmolded section of the molded member 540 may have relatively weaker adhesion to the layer 513. Therefore, the molded member 540 may be at least partially peeled off from the rear surface of the display 510 as the unmolded section is easily peeled off from the layer 513.

According to an embodiment of the disclosure, as illustrated in FIGS. 7A, 7B, and 7C, the recess 600 may be disposed in the layer 513. In an embodiment, the recess 600 may be a groove or a hole formed in the layer 513. In an embodiment, the molding liquid may be cured in a state in which at least a part thereof is filled in the recess 600 of the layer 513. Therefore, at least a part of the molded member 540 may be disposed at the recess 600 formed in the layer 513. The molded member 540 may have a higher bonding force to the rear surface of the display 510 compared to an embodiment in which the recess 600 is not disposed in the layer 513.

According to an embodiment, the layer 513 may be laminated in the order of the conductive layer 415 and the polymer layer 414 from the rear surface (e.g., a surface facing the -Z direction in FIG. 7B) of the display 510 toward a front surface (e.g., a surface facing the +Z direction in FIG. 7B) of the display 510. In an embodiment, the recess 600 may be formed by removing at least a part of the layer 513. For example, the recess 600 may be formed by removing a part of the conductive layer 415 and/or the polymer layer 414 at a position adjacent to one end part (e.g., the - X direction in FIG. 7A) of the bendable portion 520 and at a position adjacent to the other end part (e.g., the + X direction in FIG. 7A) of the bendable portion 520.

In an embodiment, as described above, the recess 600 may be a space formed by removing at least a part of the conductive layer 415. For example, the recess 600 may be a space (e.g., an opening) formed by removing the conductive layer 415. Alternatively, the recess 600 may be a groove formed by removing a part of the conductive layer 415.

In an embodiment, the recess 600 may be disposed from the conductive layer 415 toward the polymer layer 414. In an embodiment, the recess 600 may be in a form extending from the conductive layer 415 toward the polymer layer 414 as the conductive layer 415 and the polymer layer 414 are removed. In an embodiment, as a molding liquid filled in the recess 600 is cured, the molded member 540 may be bonded to a configuration (e.g., the conductive layer 415 and the polymer layer 414) which surrounds a space of the recess 600, thereby increasing a bonding force to the rear surface of the display 510.

In an embodiment, the recess 600 may be formed in various shapes. Referring to FIG. 7B, the recess 600 may be in a form that is open from the inside of the display 510 toward the outside of the display 510. In an embodiment, referring to FIG. 7C, the recess 600 may be in a groove or hole shape surrounded by the layer 513. In an embodiment, the display 510 of FIG. 7C may include the digitizer panel 416, but the shape of the recess 600 may not be limited depending on whether the display 510 includes the digitizer panel 416.

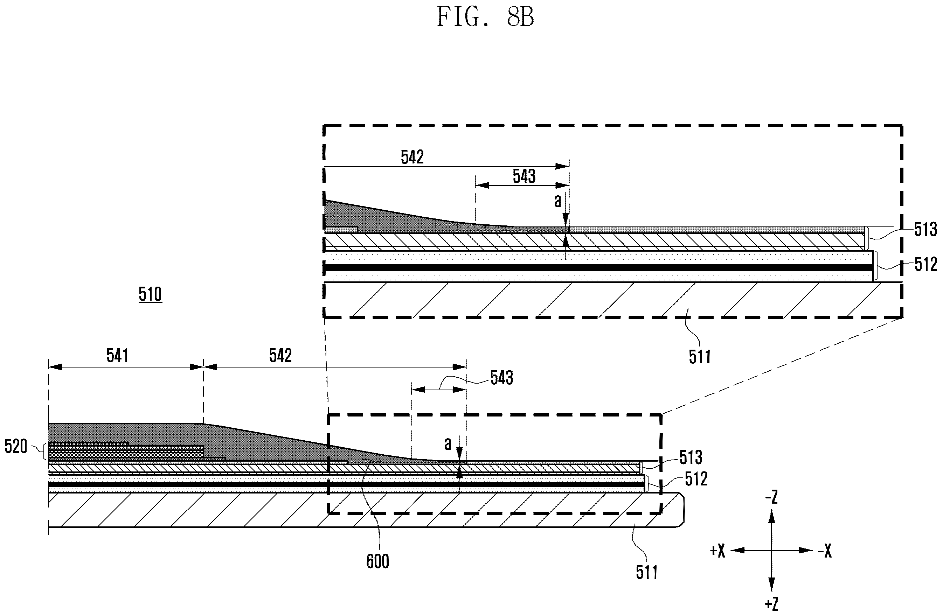

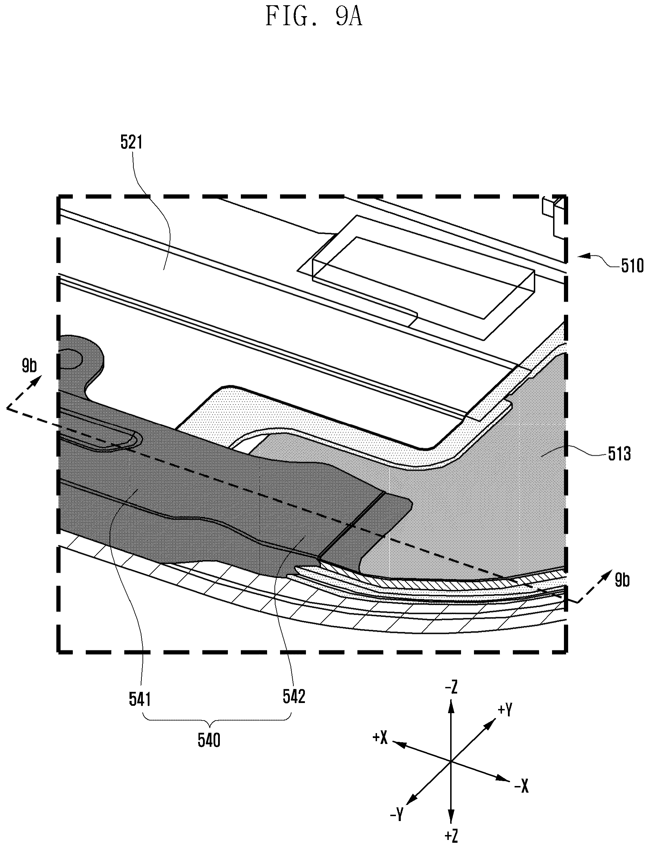

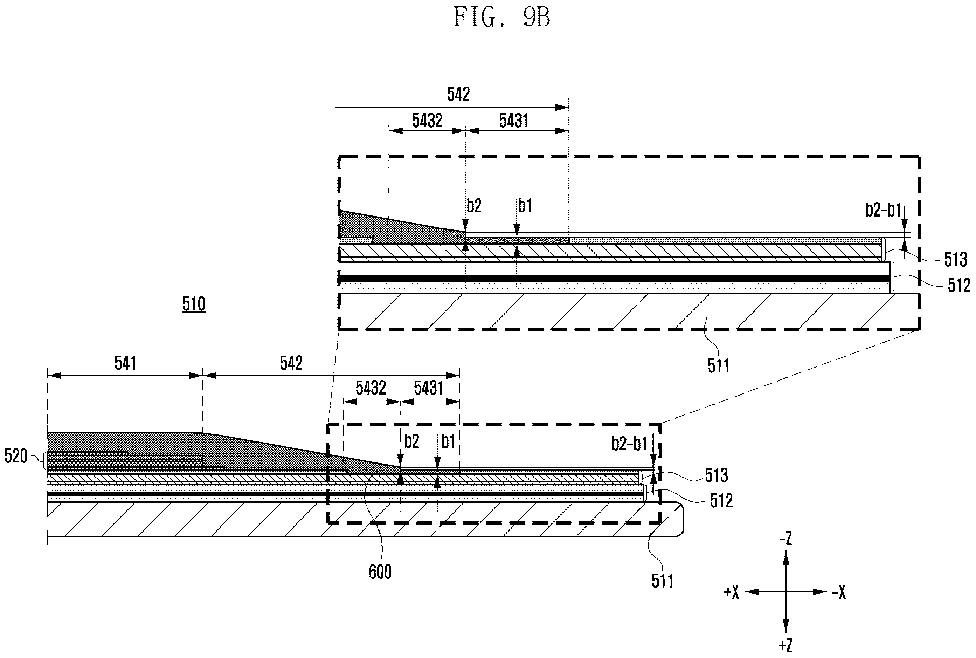

FIG. 8A is an enlarged view of a state in which a molded member is disposed at a recess formed in a layer, according to an embodiment of the disclosure. FIG. 8B is a cross-sectional view taken along line 8b-8b of FIG. 8A. FIG. 9A is an enlarged view of a state in which a molded member is disposed at a recess formed in a layer, according to an embodiment of the disclosure. FIG. 9B is a cross-sectional view taken along line 9b-9b of FIG. 9A.

According to an embodiment, as illustrated in FIGS. 8A and 9B, the shape of the molded member 540 may be variously modified. Hereinafter, the shape of the molded member 540 for increasing a bonding force between the molded member 540 and a rear surface (e.g., the rear surface of the layer 513 (e.g., a surface facing the -Z direction in FIG. 8A)) of the display 510 will be described.

According to an embodiment, as illustrated in FIGS. 8A and 8B, the molded member 540 may be disposed to cover one surface (e.g., a rear surface (e.g., a surface facing the -Z direction in FIG. 8A) of the layer 513 and the bendable portion 520 on the rear surface (e.g., a surface facing the -Z direction in FIG. 8A) of the display 510, and at least a part of the molded member may be disposed at the recess 600.

In an embodiment, referring to FIGS. 8A and 8B, the molded member 540 may include the cover portion 541 and the inclined portion 542. In an embodiment, the cover portion 541 of the molded member 540 may cover the bendable portion 520 disposed on the rear surface (e.g., the rear surface of the layer 513) of the display 510. In an embodiment, the inclined portion 542 may be disposed inclined toward one surface (e.g., a rear surface) of the layer 513 at each of one end part (e.g., a part facing the -X direction in FIG. 8A) and the other end part (e.g., a part facing the +X direction in FIG. 8A) of the cover portion 541. In an embodiment, the inclined portion 542 may extend from the bendable portion 520 toward an area of the layer 513 where the recess 600 is formed. In an embodiment, when the rear surface of the display 510 is viewed toward the +Z direction with reference to FIG. 8B, the inclined portion 542 of the molded member 540 may overlap with at least a part of the recess 600.

In an embodiment, referring to FIGS. 8A and 8B, a least a part of the inclined portion 542 of the molded member 540 may be disposed at the recess 600. For example, a part of the inclined portion 542 of the molded member 540 may fill the recess 600. In an embodiment, a thickness (a) (e.g., a length in the Z-axis direction with reference to FIG. 8B) of an end part 543 of the inclined portion 542 may be equal to a depth (e.g., a length in the Z-axis direction with reference to FIG. 8B) of the recess 600. In other words, a step may not be formed between the end part 543 of the inclined portion 542 and one surface of the layer 513. However, the disclosure may not be limited thereto, and the thickness (a) of the end part 543 of the inclined portion 542 and the depth of the recess 600 may be different.

In an embodiment, referring to FIGS. 9A and 9B, at least a part of the inclined portion 542 of the molded member 540 may be disposed at the recess 600. For example, a part of the inclined portion 542 of the molded member 540 may fill the recess 600. In an embodiment, an end part of the inclined portion 542 may include a first end part 5431, and a second end part 5432 positioned between the cover portion 541 and the first end part 5431. In an embodiment, the first end part 5431 and the second end part 5432 of the inclined portion 542 may be arranged at the recess 600. In an embodiment, a thickness (b1) (e.g., a length in the Z-axis direction with reference to FIG. 9B) of the first end part 5431 may be equal to a depth (e.g., a length in the Z-axis direction with reference to FIG. 9B) of the recess 600. However, the disclosure may not be limited thereto, and the thickness (b1) of the end part 543 of the inclined portion 542 and the depth of the recess 600 may be different.

In an embodiment, referring to FIG. 9B, the second end part 5432 of the inclined portion 542 may be in a form protruding in the -Z direction in FIG. 9B with respect to the first end part 5431 such that a step is formed between the first end part 5431 and the second end part. For example, a thickness (b2) of the second end part 5432 may be thicker than the thickness (b1) of the first end part 5431.

In an embodiment, a size (b2-b1) of a step between the first end part 5431 and the second end part 5432 may be smaller than a thickness of the sealing member 550. In an embodiment, the sealing member 550 may extend to one surface of the layer 513 along the cover portion 541, the inclined portion 542, and the end parts (e.g., the first end part 5431 and the second end part 5432) of the molded member 540. In an embodiment, the sealing member 550 may be in close contact with the molded member 540 at the step part between the first end part 5431 and the second end part 5432 of the inclined portion 542. In other words, the sealing member 550 may be in close contact with the molded member 540 regardless of the step between the first end part 5431 and the second end part 5432. Therefore, a step between the end part 543 of the inclined portion 542 and one surface of the layer 513 may be filled through the molded member 540.

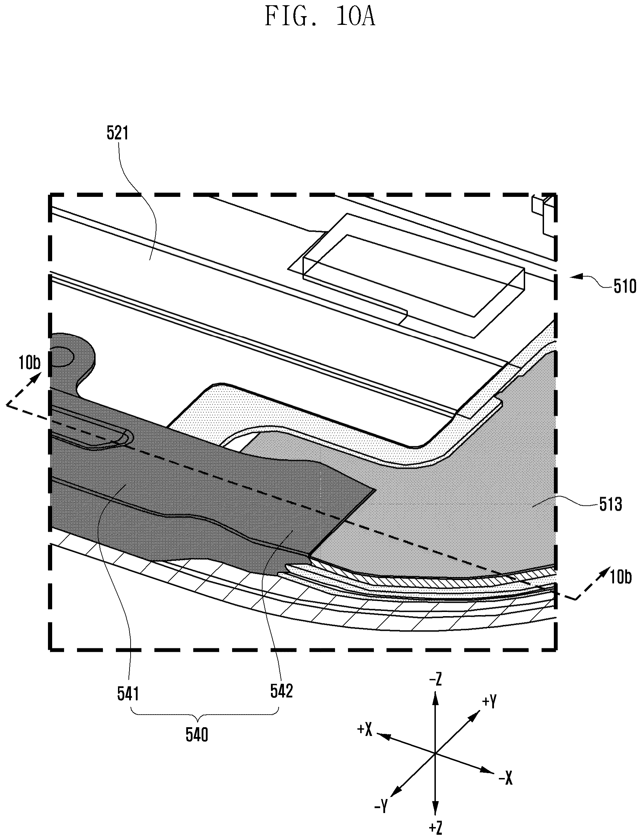

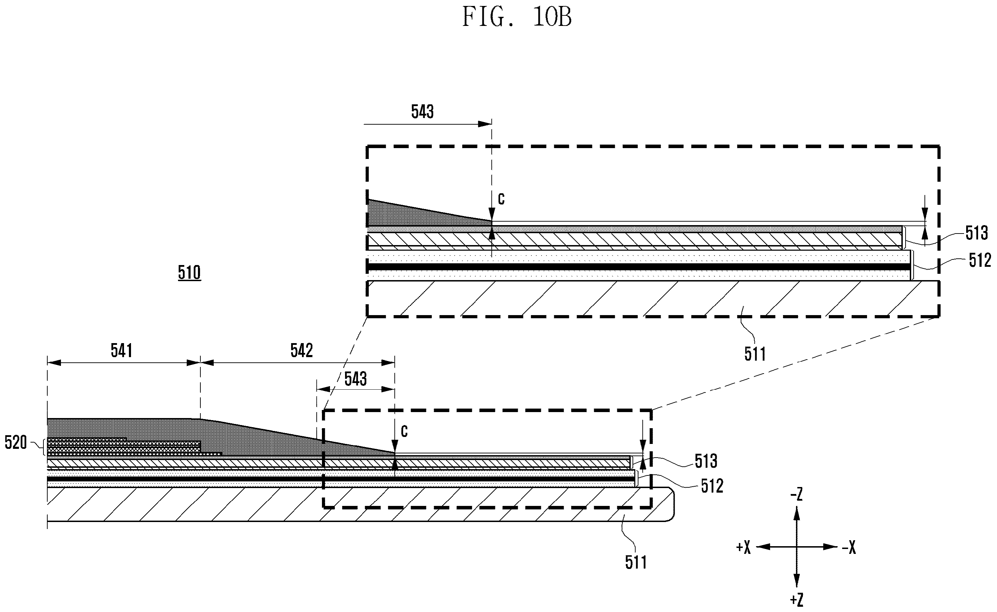

FIG. 10A is an enlarged view of a state in which a molded member is disposed on a rear surface of a display in an embodiment in which a recess is not formed in a layer, according to an embodiment of the disclosure. FIG. 10B is a cross-sectional view taken along line 10b-10b of FIG. 10A.

The following description may be for an embodiment in which the molded member 540 is disposed on the rear surface of the display 510 (e.g., the display 410 of FIG. 4) in a state in which the recess 600 is not formed in the layer 513.

According to an embodiment, as illustrated in FIGS. 10A and 10B, the molded member 540 may be disposed to cover one surface of the layer 513 and the bendable portion 520. In an embodiment, the end part 543 of the inclined portion 542 may be in a form protruding in the -Z direction in FIG. 10B with respect to one surface of the layer 513 to form a step (e.g., a thickness (c) of the end part 543 of the inclined portion 542) with respect to one surface (e.g., a rear surface, a surface facing the -Z direction in FIG. 10B) of the layer 513.

In an embodiment, the thickness (c) of the end part 543 of the inclined portion 542 may be smaller than the thickness of the sealing member 550. In an embodiment, the molded member 540 is formed so that the end part 543 of the inclined portion 542 has a certain thickness, so that a certain level of bonding force of the end part 543 of the molded member 540 to the layer 513 may be secured.

In an embodiment, the sealing member 550 may be in close contact with the molded member 540 at a step part between the end part 543 of the inclined portion 542 and one surface of the layer 513. In other words, the sealing member 550 may be in close contact with the molded member 540 regardless of the step formed between the end part 543 of the inclined portion 542 and one surface of the layer 513. Therefore, the step between the end part 543 of the inclined portion 542 and one surface of the layer 513 may be filled through the molded member 540.

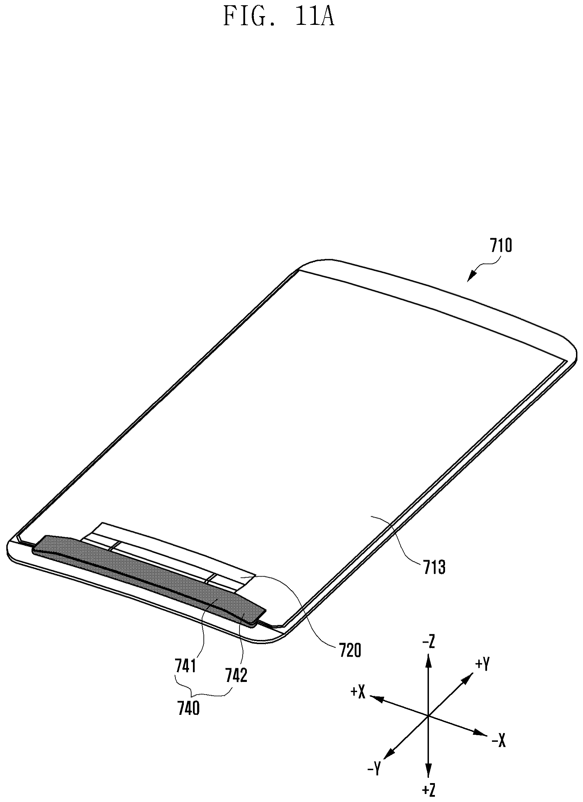

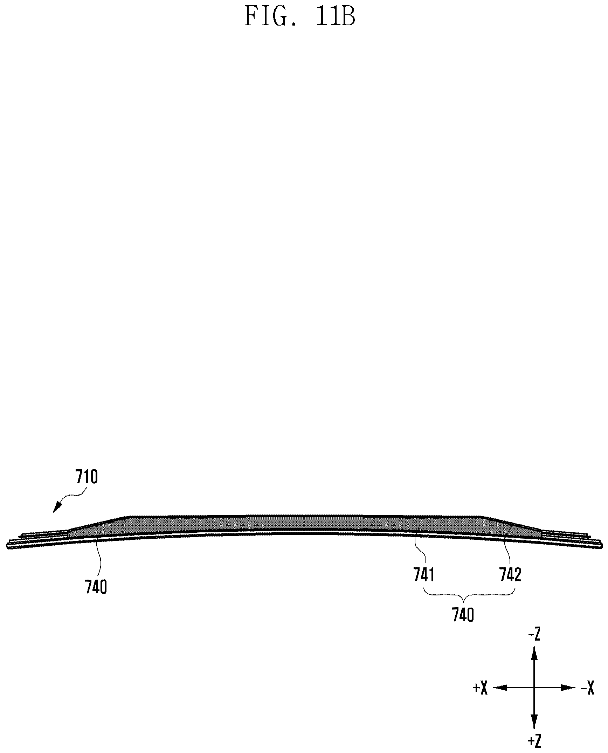

FIGS. 11A and 11B are views of a state in which a molded member is disposed on a rear surface of a curved display.

According to an embodiment, as illustrated in FIGS. 11A and 11B, a molded member 740 (e.g., the molded member 540 of FIG. 6A) may be disposed on a rear surface of a curved display 710. The molded member 740 may be formed with a curvature substantially the same as a curvature of the curved display 710. In an embodiment, the molded member 740 may be disposed on the rear surface of the curved display 710 to cover one surface (e.g., the layer 513 of FIG. 6A) of a layer 713 and a bendable portion 720 (e.g., the first connection member 420 of FIG. 4 and/or the bendable portion 520 of FIG. 6A) of the curved display 710, and thus mitigate a step between the bendable portion 720 and the layer 713.

In an embodiment, the molded member 740 may include a cover portion 741 and an inclined portion 742. In an embodiment, the inclined portion 742 may be formed at one end part and the other end part of the cover portion 741. In an embodiment, the cover portion 741 of the molded member 740 may overlap with the bendable portion 720 disposed on the rear surface of the curved display 710. In an embodiment, the inclined portion 742 may be configured to be inclined toward the layer 713 from one end part and/or the other end part of the cover portion 741 disposed in the bendable portion 720, and thus mitigate a step between the bendable portion 720 and the layer 713. Therefore, a sealing member (e.g., the sealing member 550 of FIG. 5) may extend from the cover portion 741 of the molded member 740 to one surface of the layer 713 along the inclined portion 742. The sealing member may be in close contact with the cover portion 741 of the molded member 740, the inclined portion 742, and one surface of the layer 713. Therefore, since no separation space is formed between the sealing member and the rear surface of the curved display 710, the space between the rear surface of the curved display 710 and the housing 530 may be sealed through the sealing member.

In an embodiment not shown in the drawings, a recess (not shown) (e.g., the recess 600 in FIGS. 7B and 7C) may be formed in the layer 713 of the curved display 710. At least a part of the molded member 740 may be disposed at the recess formed in the layer 713. Therefore, the molded member 740 may have a higher bonding force to the rear surface of the curved display 710 compared to an embodiment in which the recess is not disposed in the layer 713.

In the above description, a molded member (e.g., the molded member 540 of FIG. 6A and/or the molded member 740 of FIG. 11A) is described as being disposed on the display 510 of an electronic device having a bar type or plate type appearance, but the disclosure may not be limited thereto. In an embodiment, the molded member 540 or 740 may be disposed on a rear surface of a flexible display disposed in a foldable electronic device, a slidable electronic device, a stretchable electronic device, and/or a rollable electronic device. A recess (e.g., the recess 600 of FIGS. 7B and 7C) having a shape of a hole or groove may be formed on a rear surface of a flexible display. For example, the recess may be formed in a layer (e.g., the polymer layer 414 and the conductive layer 415 of FIG. 4) disposed on the rear surface of the flexible display. The molded member 540 or 740 may have an increased bonding force to the layer of the flexible display as at least a part thereof is disposed at the recess. The electronic device may include a closed-loop shaped sealing member (e.g., the sealing member 550 of FIG. 5) disposed along the perimeter of the display 510, based on a reduction of a step between the layer and a bendable portion (e.g., the first connection member 420 of FIG. 4 and/or the bendable portion 520 of FIG. 6A) of the flexible display through the inclined portion 542 or 742 of the molded member 540 or 740. For example, the sealing member may be a single-shaped waterproof tape which is not segmented into multiple parts.

According to an embodiment of the disclosure, an electronic device 101, 200, 300, or 500 may include a housing 210 or 530 and a display 160, 201, or 410 disposed in the housing. The display may include a transparent layer 411 or 511, a display panel 413 or 512 disposed on a rear surface of the transparent layer, at least one layer 513 disposed on a rear surface of the display panel, and a bendable portion 420 or 520 extending from the display panel, at least a part of the bendable portion being disposed on a rear surface of the layer. The electronic device may include a molded member 540 at least partially covering the bendable portion, the molded member including an inclined portion 542 inclined with respect to the rear surface of the layer.

In an embodiment, the electronic device may further include at least one recess 600 formed in the layer. At least a part of the inclined portion of the molded member may be disposed at the recess.

In an embodiment, the layer may include a conductive layer including a conductive material. The recess may be formed on the conductive layer, and at least a part of the inclined portion of the molded member may be disposed at the recess formed on the conductive layer.

In an embodiment, the electronic device may further include a sealing member, at least a part of which is disposed on the inclined portion of the molded member.

In an embodiment, the sealing member may be disposed on the rear surface of the layer and the molded member along the perimeter of the display.

In an embodiment, the sealing member may be formed with a uniform thickness.

In an embodiment, the inclined portion of the molded member may be inclined at an angle of 25 degrees to 35 degrees with respect to the rear surface of the layer.

In an embodiment, a step may be formed between an end part of the inclined portion of the molded member and one surface of the layer.

In an embodiment, the electronic device may further include a sealing member 550 disposed on the layer and the molded member along the perimeter of the display. In an embodiment, a size of the step between the end part 543 or 5432 of the inclined portion and the rear surface of the layer may be smaller than a thickness of the sealing member.

In an embodiment, the molded member may include a cover portion at least partially covering the bendable portion. In an embodiment, the inclined portion may include a first end part 5431 disposed at the recess and a second end part 5432 located between the first end part and the cover portion, at least a part of the second end part being disposed at the recess and protruding in a direction perpendicular to the rear surface of the layer.

In an embodiment, a thickness (b2) of the second end part may be thicker than a thickness of the first end part.

In an embodiment, at least a part of the recess may overlap the inclined portion of the molded member when viewed in a perpendicular direction to one surface of the display.

In an embodiment, the recess may be formed on the layer at a position adjacent to one end part of the bendable portion and at a position adjacent to the other end part opposite to the one end part of the bendable portion.

In an embodiment, the bendable portion may include an extension part 521 extending from the display panel and including a display control circuit (a display driver IC (DDI)) 421, and a flexible substrate 522 electrically connected to the extension part. In an embodiment, the molded member may be disposed to cover a part of the extension part. In an embodiment, the recess may be formed on the layer at a position adjacent to one end part of the extension part and at a position adjacent to the other end part of the extension part.

In an embodiment, the recess may be an opening formed on the layer.

In an embodiment, the recess may be formed by removing a part of the layer.

In an embodiment, the display may include a digitizer panel 416 disposed between the display panel and the layer.

According to an embodiment of the disclosure, an electronic device 101, 200, 300, or 500 may include a housing 210 or 530 and a display 160, 201, or 410 disposed in the housing. In an embodiment, the display may include a transparent layer 411 or 511, a display panel 413 or 512 disposed on a rear surface of the transparent layer, at least one layer 513 disposed on a rear surface of the display panel and including at least one recess 600, and a bendable portion 420 or 520 extending from the display panel and disposed on a rear surface of the layer. In an embodiment, the layer may include a conductive layer which includes a conductive material and in which the recess is formed.

In an embodiment, the electronic device may further include a molded member 540 including a cover portion 541 at least a part of which covers the bendable portion, and an inclined portion 542 which extends from the cover portion toward an area of the layer where the recess is formed, at least a part of which is disposed at the recess, and which is formed to be inclined with respect to the rear surface of the layer.

In an embodiment, the electronic device may further include a sealing member 500, at least a part of which is disposed on the inclined portion of the molded member.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

It will be appreciated that the present invention contemplates and includes embodiments based on combinations of any two or more of the embodiments disclosed above, as well as embodiments comprising any combination of the features disclosed herein. That is, the absence of an explicit indication that two features may be combined or that two embodiments may be combined does not mean that such a combination is not envisioned, but rather that such a combination is intended to be included herein.

## Claims

1. An electronic device (101, 200, 300, 500) comprising:
a housing (210, 530);
a display (160, 201, 410) disposed in the housing and comprising:
a transparent layer (411, 511),
a display panel (413, 512) disposed on a rear surface of the transparent layer,
at least one layer (513) disposed on a rear surface of the display panel, and
a bendable portion (420, 520) extending from the display panel, at least a part of the bendable portion (420, 520) being disposed on a rear surface of the at least one layer; and
a molded member (540) at least partially covering the bendable portion (420, 520), the molded member including an inclined portion (542) inclined with respect to the rear surface of the at least one layer (513).

2. The electronic device of claim 1, further comprising at least one recess (600) formed in the at least one layer (513), and
wherein at least a part of the inclined portion (542) of the molded member (540) is disposed at the at least one recess (600).

3. The electronic device of claim 2, wherein the at least one layer (513) comprises a conductive layer including a conductive material,
wherein the at least one recess (600) is formed on the conductive layer, and
wherein at least a part of the inclined portion (542) of the molded member (540) is disposed at the at least one recess (600) formed on the conductive layer.

4. The electronic device of claim 1 or 2, further comprising a sealing member (550), at least portion of which is disposed on the inclined portion (542) of the molded member (540), and
wherein the sealing member (550) is disposed on the rear surface of the at least one layer (513) and the molded member (540) along a perimeter of the display (160, 201, 410), and/or wherein the sealing member (550) is formed with a uniform thickness.

5. The electronic device of claim 1, wherein the inclined portion (542) of the molded member (540) is inclined at an angle of 25 degrees to 35 degrees with respect to the rear surface of the layer.

6. The electronic device of claim 1 or 2, wherein a step is formed between an end portion of the inclined portion (542) of the molded member (540) and a surface of the at least one layer (513).

7. The electronic device of claim 6, further comprising a sealing member (550) disposed on the at least one layer (513) and the molded member (540) along a perimeter of the display (160, 201, 410), and
wherein a size of the step between an end part (543, 5432) of the inclined portion (542) and the rear surface of the at least one layer (513) is smaller than a thickness of the sealing member (550).

8. The electronic device of claim 2, wherein the molded member (540) further includes a cover portion (541) at least partially covering the bendable portion (420, 520), and
wherein the inclined portion (542) includes a first end part (5431) disposed at the at least one recess (600) and a second end part (5432) located between the first end part (5431) and the cover portion (541), at least a portion of the second end part (5432) being disposed at the at least one recess (600) and protruding in a direction perpendicular to the rear surface of the at least one layer (513).

9. The electronic device of claim 8, wherein a thickness (b2) of the second end part (5432) is thicker than a thickness of the first end part (5431).

10. The electronic device of claim 2, wherein at least a portion of the at least one recess (600) overlaps the inclined portion (542) of the molded member (540) when viewed in a perpendicular direction to a surface of the display (160, 201, 410),

11. The electronic device of claim 2, wherein the at least one recess (600) is formed on the at least one layer (513) at a position adjacent to one end part of the bendable portion (420, 520) and at a position adjacent to the other end part opposite to the one end part of the bendable portion (420, 520).

12. The electronic device of claim 2, wherein the bendable portion (420, 520)includes an extension part (521) extending from the display panel and including a display driver IC, DDI, and a flexible substrate (522) electrically connected to the extension part (521),
wherein the molded member (540) is disposed to cover a part of the extension part (521), and
wherein the at least one recess (600) is formed on the layer at a position adjacent to one end part of the extension part (521) and at a position adjacent to the other end part of the extension part (521).

13. The electronic device of claim 2, wherein the at least one recess (600) is an opening formed on the at least one layer (513).

14. The electronic device of claim 10, wherein the at least one recess (600) is formed by removing a part of the at least one layer (513).

15. The electronic device of claim 1 or 2, wherein the display (160, 201, 410) includes a digitizer panel (416) disposed between the display panel (413, 512) and the at least one layer (513).
